# EUROPÄISCHE PATENTSCHRIFT

(11) **EP 3 363 270 B1**
(45) Veröffentlichungstag und Bekanntmachung des Hinweises auf die Patenterteilung: **25.12.2019**
(21) Anmeldenummer: 15781620.8
(22) Anmeldetag: 12.10.2015
(51) Int. Cl.: H05H 1/46, H01S 3/134, H01S 3/10

(54) **VERFAHREN UND VORRICHTUNG ZUR ERZEUGUNG VON PLASMA- BZW. LASERPULSEN MITTELS HOCHFREQUENZ-ANREGUNGSPULSEN, INSBESONDERE EIN GASENTLADUNGSLASER, SOWIE STEUEREINHEIT FÜR EINEN HOCHFREQUENZ-ANREGUNGSPULS-GENERATOR**
METHOD AND APPARATUS FOR GENERATING PLASMA OR LASER PULSES BY MEANS OF RADIOFREQUENCY EXCITATION PULSES, IN PARTICULAR A GAS-DISCHARGE LASER, AND A CONTROL UNIT FOR A RADIOFREQUENCY EXCITATION PULSE GENERATOR
PROCÉDÉ ET DISPOSITIF DE GÉNÉRATION D'IMPULSIONS DE PLASMA OU DE LASER AU MOYEN D'IMPULSIONS D'EXCITATION À HAUTE FRÉQUENCE, EN PARTICULIER UN LASER À DÉCHARGE DE GAZ, AINSI QU'UNE UNITÉ DE COMMANDE POUR UN GÉNÉRATEUR D'IMPULSIONS D'EXCITATION À HAUTE FRÉQUENCE

(43) Veröffentlichungstag der Anmeldung: 22.08.2018
(73) Patentinhaber: Trumpf Laser- und Systemtechnik GmbH, 71254 Ditzingen (DE)
(72) Erfinder: SCHULZ, Robert, 71034 Boeblingen (DE); BECK, Torsten, 70178 Stuttgart (DE)
(74) Vertreter: Kohler Schmid Möbus Patentanwälte
(86) Internationale Anmeldenummer: PCT/EP2015/073511
(87) Internationale Veröffentlichungsnummer: WO 2017/063662

(56) Entgegenhaltungen:
- US-A- 5 982 790
- US-A1- 2004 238 345
- US-A1- 2006 176 917
- US-A1- 2012 189 031
- US-A1- 2013 272 325

## Beschreibung

Die Erfindung betrifft ein Verfahren und eine Vorrichtung zur Erzeugung von Plasma- bzw. Laserpulsen mittels Hochfrequenz-Anregungspulsen insbesondere einen Gasentladungslaser, wobei zur Erfüllung von Plasma- bzw. Laserpulsvorgaben ein Medium mit Hochfrequenz-Anregungspulsen angeregt wird. Des Weiteren betrifft die Erfindung eine Steuereinheit für einen Hochfrequenz-Anregungspuls-Generator und einen Hochfrequenz-Anregungspuls-Generator mit einer solchen Steuereinheit.

### Stand der Technik

Ein derartiges Verfahren zur Erzeugung von Laserpulsen mittels Hochfrequenz-Anregungspulsen ist aus der US 2012/189031 A1 bekannt geworden.

Es ist bekannt, dass bei der Erzeugung von Laserpulsen eine Veränderung des Lasermediums eintritt, die sich z. B. auf die Leistung des erzeugten Laserpulses auswirkt. D. h. gleiche Anregungspulse führen beim selben Laserstrahlerzeuger nicht immer zu dem gleichen Ausgangslaserpuls.

Eine bekannte Maßnahme, um den Einfluss eines sich verändernden Lasermediums auf die Reproduzierbarkeit eines durch einen Hochfrequenz-Anregungspuls erzeugten Ausgangslaserpulses zu erhöhen, ist das sogenannte "Simmern". Beim Simmern wird das Lasermedium zwischen den Anregungspulsen, die zur Erzeugung eines Laserausgangspulses dienen, zusätzlich durch kurze Simmerpulse angeregt, wobei die Anregung durch die Simmerpulse aber unter der Schwelle einer Laseremission bleibt. Dadurch wird das Lasermedium in einem möglichst konstanten Zustand (nahe der Anregungsschwelle) gehalten. Beispielsweise ist das Simmern in der US 2012/189031 A1 beschrieben. Dieses bekannte Verfahren umfasst das Liefern einer Folge von HF-Simmerpulsen an die Elektroden zum Anregen des Lasergases. Die Simmerpulse haben eine Pulsdauer und eine Pulswiederholfrequenz derart, dass die Simmerpulse ausreichend freie Elektronen in dem Lasergas erzeugen, um die nachfolgende Zündung der Entladung zu erleichtern, ohne einen Laservorhang zu bewirken. Ein oder mehrere HF-Laserpulse werden wahlweise an die Elektroden geliefert, deren Pulsdauer derart gewählt ist, dass die Laserpulse die Entladung zünden und den Laservorgang induzieren. Das Liefern der Simmerpulse wird vor dem Liefern der ersten Laserpulse aufgeschoben und wiederaufgenommen, wenn ein anderer HF-Laserpuls nicht innerhalb einer vorgegebenen Zeitspanne geliefert wird, welche auf die Fertigstellung der Lieferung der früheren Laserpulse folgt.

US 5 982 790 A offenbart ebenfalls ein Verfahren zur Erzeugung von Laserpulsen, welche von einem Gaslaser erzeugt werden. Zusätzlich werden die Anregungspulse umso stärker energiereduziert, je höher eine verbleibende Anregung des Mediums durch die vorhergehende Anregung ist.

In der DE 11 2013 002 021 T5 wird für einen diffusionsgekühlten CO₂-Gasentladungslaser erläutert, dass bei zwei aufeinanderfolgenden identischen Hochfrequenz-Anregungspulssequenzen der zweite Ausgangslaserpuls eine niedrigere Laserleistung aufweist als der erste Ausgangslaserpuls. Ursache für diesen Unterschied ist gemäß der DE 11 2013 002 021 T5 der Wärmeeintrag in das Lasermedium durch die erste Anregungspulssequenz, aufgrund derer die Ausbeute der zweiten Anregungspulssequenz sinkt. Um dies zu kompensieren, sind empirische Erhöhungsfaktoren für die zweite HF-Anregungspulssequenz hinterlegt. Die Erhöhungsfaktoren variieren in Abhängigkeit der Zeit, die zwischen dem Ende der ersten Anregungspulssequenz und dem Beginn der zweiten Anregungspulssequenz vergeht. Die Erhöhungsfaktoren bewirken immer eine Erhöhung der Leistung der zweiten Anregungspulssequenz, wobei dies auf unterschiedliche Weise bewerkstelligt wird. So können die Pulse der zweiten Anregungspulssequenz alle zeitlich verlängert werden oder auch im Vergleich zur ersten Anregungspulssequenz zusätzliche Pulse hinzugefügt werden.

### Aufgabe der Erfindung

Die Erfindung hat sich zur Aufgabe gesetzt, die Erzeugung von Plasma- bzw. Laserpulsen durch Hochfrequenz-Anregungspulse derart zu verbessern, dass die erzeugten Pulse präziser und reproduzierbarer Pulsvorgaben, insbesondere variierenden Pulsvorgaben, folgen können.

### Beschreibung der Erfindung

Gelöst wird die Aufgabe durch ein Verfahren mit den Merkmalen von Anspruch 1 sowie durch eine Steuereinheit mit den Merkmalen von Anspruch 10. Dies ermöglicht eine besonders einfache und hochdynamische steuerungstechnische

Bevorzugte Ausführungsformen der vorliegenden Erfindung werden in den abhängigen Ansprüchen definiert.

Der Erfindung liegt die Erkenntnis zugrunde, dass ein Grund für Schwankungen der Ausgangspulsenergie (ggfs. auch der Ausgangspulsleistung) von mittels Hochfrequenz-Anregung erzeugten Pulsen darin besteht, dass aufgrund vorhergehender Anregungen bereits ein relativ hohes Anregungsniveau in dem Medium vorliegt, so dass durch die Hochfrequenz-Anregungspulse schneller ein Puls erzeugt wird, als bei einem nicht oder geringer angeregten Medium. Die Laserschwelle zur Pulserzeugung wird früher überschritten.

Wenn also Hochfrequenz-Anregungspulse gleicher Energie einerseits ein schon angeregtes Medium und anderseits ein kaum angeregtes Medium beaufschlagen, wird im Falle der Beaufschlagung des bereits angeregten Mediums früher und daher insgesamt länger ein Puls erzeugt. Aufgrund der längeren Pulsdauer ergibt sich eine höhere Energie des Pulses. Je nach verbleibendem Anregungszustand des Mediums zum Zeitpunkt des Beginns des Hochfrequenz-Anregungspulses ergibt sich daher ein größerer oder kleinerer Unterschied zwischen der Pulsvorgabe und dem tatsächlich erzeugten Ausgangspuls.

Die Erfindung löst dieses Problem durch eine dynamische Anpassung der Hochfrequenz-Anregungspulse, welche die verbleibende Anregung des Mediums zum Zeitpunkt einer erneuten Pulsanfrage bzw. -vorgabe berücksichtigt. Überraschend wirkungsvoll und auf einfache Weise werden die Abweichungen der erzeugten Pulse von den Pulsvorgaben reduziert, indem in Abhängigkeit der Höhe der verbleibenden Anregung des Mediums ein Hochfrequenz-Anregungspuls unterschiedlich stark energiereduziert wird.

Vorzugsweise erfolgt diese Anpassung in der Steuereinheit eines Anregungspuls-Generators einer Vorrichtung zur Erzeugung eines Plasma- bzw. Laserpulses, insbesondere eines Laserstrahlerzeugers, laufend bei der Erzeugung der Pulse, die auf Basis von Pulsanfragen bzw. Pulsvorgaben an die Steuereinheit erzeugt werden.

Generell kann eine Erzeugung eines (zusammenhängenden) Ausgangspulses auch durch mehrere kürzere Anregungspulse erfolgen, wobei die Pausen zwischen diesen Anregungspulsen so kurz sind, dass die Pulsemission im Medium zwischen den Anregungspulsen nicht abbricht, sondern sich gegebenenfalls nur etwas abschwächt. In diesem Fall, kann eine erfindungsgemäße Energiereduktion des Anregungspulses beispielsweise durch ein Weglassen von Einzelpulsen in der Anregungspulssequenz und/oder durch ein Verkürzen von einzelnen Anregungspulsen in der Pulsfolge bestehen.

Alterativ oder ergänzend können die Anregungspulse auch durch eine Änderung ihrer Leistung energiereduziert werden.

Besonders vorteilhaft wird die Erfindung bei einem Verfahren eingesetzt, bei welchem die Ausgangspulse jeweils durch einen (zusammenhängenden) Anregungspuls erzeugt werden.

Vorzugsweise beginnt der Hochfrequenz-Anregungspuls zur Erzeugung eines vorgegebenen Pulses also je nach Anregungszustand des Mediums später oder endet früher.

Insbesondere führt eine Pulsvorgabe, die zwei Pulse gleicher Länge aufweist, in Abhängigkeit der verbleibenden Anregung des Mediums zu unterschiedlichen Hochfrequenz-Anregungspulsen. Je höher die verbleibende Anregung ist, desto kürzer ist der Hochfrequenz-Anregungspuls. Generell ist die verbleibende Anregung des Mediums von der vorhergehenden Anregung abhängig. Umso länger die Zeitspanne seit den letzten Hochfrequenz-Anregungspulsen ist und umso kürzer diese Pulse waren, desto niedriger ist die verbleibende Anregung des Mediums.

Vorzugsweise kann bei der Festlegung der Anregungspulse auf Basis einer Pulsvorgabe auch eine weitere Anpassung/Modifikation der Anregungspulse unter Berücksichtigung eines oder mehrerer anderer Effekte erfolgen. Bei einer solchen Variante ist es durchaus denkbar, dass die erfindungsgemäße Modifikation unter Berücksichtigung der restanregungsabhängigen Verzugszeiten zu einer Energiereduktion, insbesondere einer Verkürzung von Anregungspulsen führen würde, aufgrund der Berücksichtigung anderer Effekte aber insgesamt eine geringere oder keine Energiereduktion, insbesondere keine Verkürzung, oder sogar eine Energieerhöhung, insbesondere eine Verlängerung dieser Anregungspulse erfolgt.

Im Falle eines besonders bevorzugten Ausführungsbeispiels der Erfindung wird mittels der Hochfrequenz-Anregungspulse ein Lasermedium eines Gasentladungslasers zur Erzeugung von Laserpulsen angeregt. Aufgrund der im gasförmigen Lasermedium der Laserpulsemission vorgelagerten Prozesse unterscheiden sich die Verzugszeiten zwischen dem Beginn eines Hochfrequenz-Anregungspulses und dem Beginn des dadurch erzeugten Laserpulses besonders deutlich je nachdem, wie hoch die verbleibende Anregung des Mediums durch vorhergehende Anregungen ist. Bei Festkörperlasern tritt dieser Effekt zwar auch auf. Aufgrund des wesentlich schnelleren Abklingens von Restanregungen im Medium wirkt sich der Effekt aber selbst bei hochdynamischen Pulsfolgen nicht so stark aus.

Daher hat die erfindungsgemäße dynamische Bestimmung der Hochfrequenz-Anregungspulse unter Berücksichtigung der verbleibenden Anregung des Lasermediums bei Gasentladungslasern einen besonders positiven Effekt auf die Genauigkeit, mit welcher ein erzeugter Puls mit der Pulsvorgabe übereinstimmt.

Dies trifft in noch größerem Maße bei CO- oder CO₂-Gasentladungslasern zu. Beispielsweise beeinflussen die im Gasgemisch des CO₂-Gasentladungslasers vorgelagerten Prozesse, insbesondere das Pumpen des Stickstoffs in einen angeregten Zustand usw., maßgeblich die Verzugszeit der Pulsemission und variieren zudem stark in Abhängigkeit der verbleibenden Anregung. So ist der Anteil an Stickstoff im angeregten Zustand im Falle einer hohen verbleibenden Anregung wesentlich höher.

Die Hochfrequenz-Anregungspulse liegen vorzugsweise im Bereich von 1-1000 MHz, insbesondere im Bereich von 10 bis 15 MHz. Die Modulation der Hochfrequenz-Anregungspulse erfolgt bevorzugt durch Ein- und Ausschalten des elektromagnetischen Feldes.

Bevorzugt wird die Erfindung bei Pulsen mit einer Dauer von 0,5 bis 50 µs und Pulsabständen von 10 µs bis 25 ms verwendet. Vorzugsweise erfolgt bei dem erfindungsgemäßen Verfahren eine Pulserzeugung nach einer Pulsvorgabe, bei welcher die Dauer und die Abstände der Pulse variieren, also nicht bei einem Betrieb, bei welchem lediglich mit einer konstanten Repetitionsrate der Pulse gearbeitet wird. Bei solchen Anwendungen ergibt sich eine besonders signifikante Verbesserung durch die erfindungsgemäße dynamische Steuerung der Hochfrequenz-Anregungspulse.

Eine besonders bevorzugte Anwendung stellt beispielsweise das Bohren von Leiterplatten mittels Laserpulsen dar, die durch einen erfindungsgemäß gesteuerten geströmten CO₂-Gasentladungslaser erzeugt werden. Bei dieser Anwendung sind bei hoher Dynamik (kurzen Pulsabständen) variierende Pulsvorgaben mit möglichst niedrigen Energieabweichungen zu erfüllen.

Bei diffusionsgekühlten CO₂-Gasentladungslasern kommt, wie in der eingangs genannten DE 11 2013 002 021 T5 erläutert, ein Erwärmungseffekt stärker zum Tragen, der sich eher gegenläufig zu der verkürzten Verzugszeit durch Restanregung auswirkt. Aus diesem Grunde ist die Erfindung besonders wirkungsvoll und einfach bei geströmten CO₂-Gasentladungslasern anzuwenden, da bei diesen Lasertypen der erwähnte Erwärmungseffekt eine untergeordnete Rolle spielt.

Beispielweise wird die Erfindung vorteilhaft im gepulsten Betrieb eines längsgeströmten CO₂-Gasentladungslasers "TruFlow" der Fa. TRUMPF eingesetzt.

Bei einem besonders bevorzugten Ausführungsbeispiel wird zur Bestimmung der Hochfrequenz-Anregungspulse ein Maß für die Verzugszeit zwischen dem Beginn eines Hochfrequenz-Anregungspulses und des dadurch erzeugten Plasma- bzw. Laserpulses verwendet.

Unter Maß wird im Folgenden ein Wert verstanden, der in einer engen Korrelation zu der Größe steht oder auch direkt die Größe selbst quantitativ angibt. Das Maß für die Verzugszeit kann in diesem Sinne z. B. eine konkrete Zeitspanne darstellen, oder auch beispielsweise eine Kenngröße mit einem Wert von 0 bis 1, wobei 0 für eine Verzugszeit bei nicht restangeregtem Medium und 1 für eine maximal durch Voranregung verkürzte Verzugszeit steht.

Indem ein Maß für die veränderte Verzugszeit bei der Festlegung der Hochfrequenz-Anregungspulse verwendet wird, fließt in die dynamische Anpassung gerade diejenige Größe ein, die für die Schwankungen vor allem ursächlich ist.

Aus demselben Grunde ist es von weiterem Vorteil, wenn bei einem besonders bevorzugten Ausführungsbeispiel das Maß für die Verzugszeit in Abhängigkeit eines Maßes für die verbleibende Anregung des Mediums bestimmt wird. Ein Maß für die verbleibende Anregung des Mediums kann beispielsweise in Form eines Wertes zwischen 0 und 1 stehen, wobei Null für keine verbleibende Anregung und 1 für eine maximale verbleibende Anregung steht. Das Maß für die verbleibende Anregung kann auch in Form eines Energiewertes verarbeitet werden, der für die Bestimmung der Hochfrequenz-Anregungspulse ausgehend von einer Pulsvorgabe verwendet werden kann.

Vorzugsweise wird zur Bestimmung der Hochfrequenz-Anregungspulse auf ein hinterlegtes Berechnungsmodell zurückgegriffen. Dank der Verwendung eines hinterlegten Berechnungsmodells, ist insbesondere keine zusätzliche Messung von Zustandsgrößen, z. B des Lasermediums, nötig. Besondere Sensoren usw. sind zur Durchführung der Erfindung nicht erforderlich. Der Rückgriff auf ein Berechnungsmodell ermöglicht auch den Einsatz der Erfindung bei variablen, insbesondere hochdynamischen Pulssequenzen, da die Rechenzeiten eines hinterlegten Berechnungsmodells, das nicht auf laufend erfasste Messwerte zurückgreifen muss, kürzer sind, als diejenigen einer Regelkette mit Rückgriff auf laufend erfasste Messwerte. Besonders vorteilhaft ist es, wenn das Berechnungsmodell auf ohnehin in der Steuerung vorliegende Werte zurückgreift, wie beispielsweise die Profile der Pulsvorgaben und/oder die Profile der bereits ausgeführten Hochfrequenz-Anregungspulse.

Wie bereits erläutert, sind Unterschiede in den Verzugszeiten und der verbleibenden Anregung im Lasermedium ursächliche Größen für Energieabweichungen der erzeugten Pulse, so dass das hinterlegte Berechnungsmodell vorzugsweise ein Maß für die verbleibende Anregung des Mediums und/oder für die Verzugszeit zwischen dem Beginn eines Hochfrequenz-Anregungspulses und des dadurch erzeugten Plasma- bzw. Laserpulses bestimmt.

Bei einem besonders bevorzugten Ausführungsbeispiel werden zur Bestimmung eines Maßes für die verbleibende Anregung des Mediums die Start- und/oder Endzeitpunkte der vorhergehenden Hochfrequenz-Anregungspulse verwendet. In einfacher Weise kann eine Berücksichtigung der Historie der Medienanregung auf Basis von ohnehin in der Steuerung vorliegenden Daten erfolgen.

Insbesondere ausgehend von Start- und/oder Endzeitpunkten der vorhergehenden Hochfrequenz-Anregungspulse kann auf einfache und mit einer für eine hochdynamische Steuerung ausreichenden Geschwindigkeit zur Bestimmung eines Maßes für die verbleibende Anregung des Mediums eine Funktion des Anregungsverfalls, wenn keine Hochfrequenz-Anregung erfolgt, und/oder eine Funktion der Anregungsveränderung während einer Hochfrequenz-Anregung verwendet werden.

Aufgrund der kurzen Pulsdauern und -abstände bei den bevorzugten Anwendungen ergeben sich hohe Anforderung an die Geschwindigkeit der Steuerungselektronik. Bei einem besonders bevorzugten Ausführungsbeispiel wird daher zur Bestimmung der Hochfrequenz-Anregungspulse eine programmierbare (Logik-)Gatter-Anordnung (Field Programmable Gate Array (FPGA)) verwendet.

Bei einem besonders bevorzugten Ausführungsbeispiel wird das Medium zwischen Hochfrequenz-Anregungspulsen zur Erzeugung von Plasma- bzw. Laserpulsen zusätzlich mit Hochfrequenz-Anregungspulsen angeregt, durch welche das Medium aber nicht zur Laseremission angeregt wird (Simmerpulse).

Dank der erfindungsgemäßen Festlegung der Hochfrequenz-Anregungspulse unter Berücksichtigung der verbleibenden Anregung des Mediums durch vorhergehende Hochfrequenz-Anregungen können bei einem CO₂-Gasentladungslaser Pulse mit Pulsdauern von 0,5 bis 50 µs und Pulsabständen von 10 µs bis 25 ms erzeugt werden, bei welchen sich die Abweichungen der Pulsenergie gegenüber der Pulsvorgabe im Vergleich zu einer Steuerung ohne die restanregungsabhängige Anpassung mindestens halbieren lassen.

Bei einem besonders bevorzugten Ausführungsbeispiel wird ein Kalibrierprozess durchgeführt, bei welchem Parameter bestimmt werden, die durch das hinterlegte Berechnungsmodell verwendet werden. Es ergibt sich ein Verfahren, das noch flexibler und optimierter auf sich verändernde Einflüsse reagieren kann.

Ein weiterer Aspekt der Erfindung betrifft eine Steuereinheit für einen Anregungsfrequenz-Generator für eine Vorrichtung zum Erzeugen von Plasma- bzw. Laserpulsen mittels Hochfrequenz-Anregungspulsen, welche zur Durchführung eines erfindungsgemäßen Verfahrens konfiguriert ist, d.h. eine Steuereinheit, die zum Erzeugen von Plasma- bzw. Laserpulsen mittels Hochfrequenz-Anregungspulsen nach dem in Ansprüche1-9 definierte erfindungsgemäßen Verfahren arbeitet.

Wie bereits erläutert, ist es besonders bevorzugt, wenn diese Vorrichtung als Gasentladungslaser, vorzugweise als CO- oder CO₂-Gasentladungslaser und/oder als schnellgeströmter Gasentladungslaser, ausgebildet ist.

Weitere Aspekte der Erfindung betreffen den Anregungsfrequenz-Generator mit einer solchen Steuereinheit sowie die Vorrichtung zum Erzeugen von Plasma-bzw. Laserpulsen mit einem den Anregungsfrequenz-Generator.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert. Im Einzelnen zeigen:
- **Fig. 1**: eine schematische Darstellung einer Vorrichtung zur Erzeugung von Laserpulsen mittels Hochfrequenz-Anregungspulsen in Form eines geströmten CO₂-Gasentladungslasers einschließlich der zugehörigen Steuereinheit,
- **Fign. 2 bis 4**: Diagramme, welche eine Pulsvorgabe, eine resultierende Vorgabe an den Hochfrequenz-Generator sowie die Hochfrequenz-Anregungspulse und die dadurch erzeugten Laserpulse zeigen,
- **Fign. 5 bis 7**: hinterlegte Funktionen, welche ein Anpassungs-Modul zur Anpassung der Hochfrequenz-Anregungspulse verwendet.

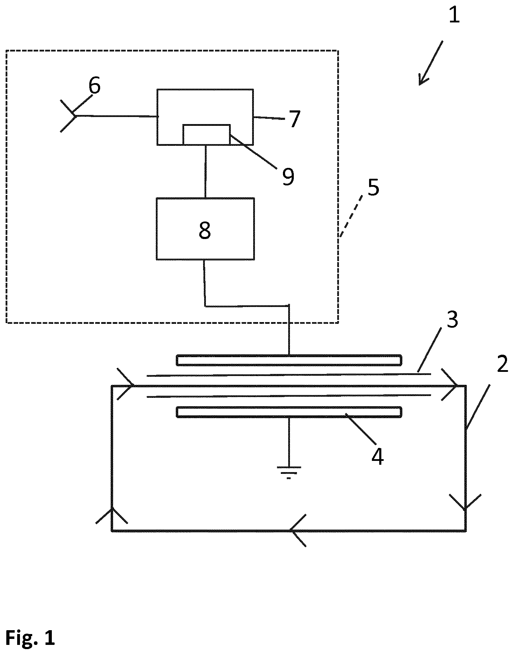

Figur 1 zeigt eine Vorrichtung **1** zur Erzeugung von Plasma- bzw. Laserpulsen mittels Hochfrequenz-Anregungspulsen, welche als geströmter CO₂-Gasentladungslaser ausgebildet ist. Ein gasförmiges Lasermedium **2** zirkuliert durch einen Resonanzraum **3,** in welchem das Lasermedium 2 mittels Hochfrequenz-Anregungselektroden **4** zur Emission von Laserpulsen angeregt werden kann. Das Lasermedium 2 besteht im Wesentlichen aus Kohlendioxid, Stickstoff und Helium, z. B. im Mischverhältnis von 5,5:29:65,5. Der Resonanzraum 3 wird von zwei (nicht dargestellten) Spiegeln (Rück- und Auskoppelspiegel) begrenzt.

Die Laserpulse weisen beispielsweise eine Wellenlänge von 10,6 µm auf. Es können Laserpulse mit einer Pulsdauer von 0,5 bis 50 µs und Pulsabständen von 10µs bis 25 ms erzeugt werden. Die Hochfrequenz-Anregungspulse liegen bei Frequenzen im MHz-Bereich, insbesondere bei Frequenzen von 10 bis 15 MHz. Die Modulation der Hochfrequenz-Anregungspulse erfolgt durch Ein- und Ausschalten des elektromagnetischen Feldes.

Ein Anregungspuls-Generator **5** des CO₂-Gasentladungslasers 1 weist eine Steuereinheit auf, welche u. a. einen Eingangsport **6** für Pulsvorgaben und einen Anregungspuls-Ermittler **7** umfasst. Der Eingangsport 6 empfängt Pulsvorgaben, z. B. von einer (nicht gezeigten) Einheit, welche ein numerisches Bearbeitungsprogramm abarbeitet, und leitet diese an den Anregungspuls-Ermittler 7 weiter. Im Anregungspuls-Ermittler 7 werden, ausgehend von der Pulsvorgabe, Hochfrequenz-Anregungspulse festgelegt, mittels derer Laserpulse entsprechend der Pulsvorgabe erzeugt werden. Teil des Anregungspuls-Ermittlers 7 ist ein hochdynamisches Anpassung-Modul **9,** welches die Hochfrequenz-Anregungspulse in Abhängigkeit einer verbleibenden Anregung des Lasermediums anpasst bzw. modifiziert.

Bei einem bevorzugten Beispiel ist das hochdynamische Anpassung-Modul 9 in Form einer programmierbaren (Logik-)Gatter-Anordnung (FPGA) ausgebildet. Es kann aber auch als integrales Element eines Mikroprozessors des Anregungspuls-Ermittlers 7 ausgestaltet sein. Weitere Alternativen für eine steuerungstechnische Implementierung bestehen in einem CPLD (Complex Programmable Logic Device) oder in jeder anderen Art von Logik-Bausteinen.

Die durch den Anregungspuls-Ermittler 7 definierten Anregungspulse werden dem Anregungspuls-Erzeuger 8 zugeführt, der entsprechende Anregungspulse an die Anregungselektroden 4 ausgibt. Durch die auf das Lasermedium 2 im Resonanzraum 3 einwirkenden Anregungspulse werden schließlich Laserpulse erzeugt. Die erzeugten Laserpulse können z. B. über nicht gezeigte Strahlführungskomponenten einem Laserbearbeitungskopf zur Bearbeitung eines Werkstücks zugeführt werden.

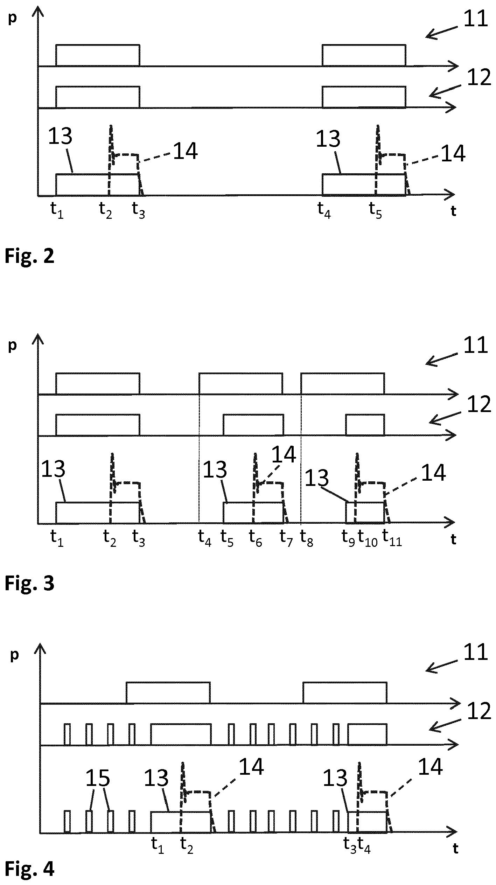

Im Folgenden wird das Verfahren zur Erzeugung von Laserpulsen unter Berücksichtigung des Zustandes des Lasermediums 2 anhand verschiedener Pulsfolgen erläutert, die in den Figuren 2 bis 4 gezeigt sind. In den Figuren 2 bis 4 ist jeweils oben eine am Eingangsport 6 ankommende Pulsvorgabe **11** dargestellt. Darunter sind die Anregungspuls-Vorgaben **12** dargestellt, welche der Anregungspuls-Ermittler 7 aufgrund der Pulsvorgabe 11 festlegt und an den Anregungspuls-Erzeuger 8 weiterleitet. Im jeweils untersten Diagramm sind die Hochfrequenz-Anregungspulse **13** und die dadurch erzeugten Laserpulse **14** gezeigt. Es sei erwähnt, dass die Zeitskalen der Diagramme aus den verschiedenen Figuren 2 bis 4 durchaus voneinander abweichen.

Figur 2 zeigt eine einfache Pulsfolge mit zwei gleich langen Laserpulsen 14. Es ist gut ersichtlich, dass zwischen dem Beginn t₁, t₄ der jeweiligen Anregungspulse 13 und dem Beginn t₂, t₅ des dadurch erzeugten Laserpulses 14 eine Verzugszeit tᵥ vergeht. Diese Verzugszeit tᵥ hat Ihre Ursache in Prozessen im Lasermedium 2, bevor eine Laseremission erfolgt. Insbesondere muss zunächst der Stickstoff angeregt werden und die Energie vom angeregten Stickstoff durch Kollision an das Kohlendioxid weitergeben werden, bevor das Kohlendioxid dann die Anregungsenergie durch Laseremission abgibt. Zu Beginn weisen die Laserpulse 14 in bekannter Weise eine Leistungsspitze auf. Der Leistungsspitze folgt eine Zeitspanne mit relativ konstanter Leistung des Laserpulses 14, bis der Laserpuls 14 relativ zeitnah nach dem Abschalten des zugehörigen Anregungspulses 13 abklingt.

In dem Beispielsfall gemäß Figur 2 sind die Verzugszeit tᵥ beim ersten Laserpuls 14 (tᵥ = t₂- t₁) gleich lang wie die Verzugszeit tᵥ beim zweiten Laserpuls 14 (tᵥ = t₅ - t₄). Dies liegt insbesondere daran, dass zwischen dem Ende t₃ des ersten Anregungspulses 13 und dem Beginn t₄ des zweiten Anregungspulses 13 zur Erzeugung des zweiten Laserpulses 14 relativ viel Zeit vergangen ist (z. B. einige ms). Innerhalb dieser Zeitspanne ist die durch den ersten Anregungspuls 13 im Lasermedium 2 verbliebene Anregung weitgehend abgeklungen. Durch das Anpassung-Modul 9 erfolgt bei dieser Pulsfolge keine Anpassung der Hochfrequenz-Anregungspulse 13.

In Figur 3 ist nun ein Beispiel einer Pulsfolge gezeigt, bei welcher eine Verkürzung der Hochfrequenz-Anregungspulse 13 in Abhängigkeit der verbleibenden Anregung des Lasermediums 2 durch die vorhergehenden Hochfrequenz-Anregungspulse 13 erfolgt.

Die Pulsvorgabe 11 umfasst drei Pulse, die jeweils gleich lang sind und relativ kurz aufeinander folgen. Der Anregungspuls-Ermittler 7 bestimmt daraus eine Vorgabe für drei unterschiedlich lange Hochfrequenz-Anregungspulse 13. Der erste Hochfrequenz-Anregungspuls 13 ist am längsten, da zu dessen Beginn noch keine Anregung des Lasermediums 2 durch vorhergehende Anregungspulse 13 vorliegt. Der erste Laserpuls 14 beginnt mit einer Verzugszeit tᵥ = t₂ - t₁.

Der zweite Anregungspuls 13 ist etwas kürzer als der erste Anregungspuls 13, da das Lasermedium 2 zu Beginn des zweiten Anregungspulses 13 noch durch den ersten Anregungspuls 13 angeregt ist und somit die Verzugszeit tᵥ = t₆ - t₅ zwischen dem Beginn t₅ des zweiten Anregungspulses 13 und dem Beginn t₆ des zweiten Laserpulses 14 kürzer ist als beim ersten Laserpuls 14.

Der dritte Anregungspuls 13 ist der kürzeste, da das Lasermedium 2 zu Beginn des dritten Anregungspulses 13 noch mehr Restanregung aufweist als zu Beginn des zweiten Anregungspulses 13. Dies liegt einerseits an der kürzeren Zeitspanne zwischen Ende t₇ des zweiten Anregungspulses 13 und Beginn t₉ des dritten Anregungspulses 13, aber auch zusätzlich an der verbleibenden Anregung durch den ersten Anregungspuls 13. Aufgrund des höheren Maßes an verbleibender Anregung verkürzt sich die Verzugszeit tᵥ = t₁₀ - t₉ beim dritten Laserpuls 14 nochmals gegenüber der Verzugszeit tᵥ = t₆ - t₅. Der Anregungspuls-Ermittler 7 berücksichtigt diese Umstände und passt die Länge der Anregungspulse 13 entsprechend an. Dies erfolgt bei dem gezeigten Beispiel, indem der zweite und dritte Anregungspuls 13 später beginnen, als durch die Pulsvorgabe 11 vorgegeben wäre. Der zweite Anregungspuls 13 beginnt um eine Anpassungszeit tₐ = t₅- t₄ später. Der dritte Anpassungspuls 13 beginnt um eine Anpassungszeit tₐ = t₉- t₈ später.

Aus Figur 3 ist ersichtlich, dass dank der dynamischen Anpassung alle drei erzeugten Laserpulse 14, wie in der Pulsvorgabe 11 gefordert, gleich lang sind und daher auch die gleiche Laserenergie pro Laserpuls 14 erzeugt wird. Die Laserenergie bzw. Dauer weist zwar einen Unterschied gegenüber der durch die Pulsvorgabe 11 vorgegeben Energie bzw. Dauer auf. Da dieser Unterschied aber bei allen drei Laserpulsen 14 konstant ist, kann er vorab beim Erstellen der Pulsvorgabe 11 berücksichtigt werden. Alternativ kann der Anregungspuls-Ermittler 7 in einem abgewandelten Modus, die Anregungspulse 13 um den konstanten Unterschied verlängern.

Im Beispiel gemäß Figur 2 beginnen zudem alle drei Laserpulse 14 mit dem gleichen zeitlichen Versatz gegenüber der Pulsvorgabe (t₂ - t₁ = t₆ - t₄ = t₁₀ - t₈). Dieser Anpassungsmodus ist bei bestimmten hochdynamischen Anwendungen von besonderem Vorteil.

Alternativ ist es aber auch möglich, dass der Anregungspuls-Ermittler 7 die Anregungspulse 13 derart anpasst, dass die Anregungspulse 13 möglichst schnell starten und somit die Laserpulse 14 möglichst schnell erzeugt werden, aber die Anregungspulse 13 je nach verbleibendem Anregungszustand des Lasermediums früher beendet werden, um die Laserpulse 14 jeweils mit einer Laserleistung zu erzeugen, welche zumindest mit einem konstanten Unterschied gegenüber der Pulsvorgabe 11 versehen ist.

Bei einem besonders bevorzugten Beispiel kann zwischen den verschiedenen Betriebsmodi des Anregungspuls-Ermittlers 7 gewählt werden, je nach dem was für die jeweilige Bearbeitungsaufgabe am vorteilhaftesten ist.

In Figur 4 ist schließlich ein Beispiel gezeigt, bei welchem durch den Anregungspuls-Ermittler 7 zusätzlich zu den Anregungspulsen 13, durch welche Laserpulse 14 erzeugt werden, auch noch sogenannte Simmerpulse **15** an den Anregungspuls-Generator 8 ausgeben werden. Die Simmerpulse 15 sind kurz genug und der Abstand zwischen ihnen ist groß genug, damit durch sie kein Laserpuls 14 erzeugt wird. Sie bewirken aber ein relativ gleichbleibendes Anregungsniveau im Lasermedium 2, so dass die Unterschiede der Verzugszeiten tᵥ geringer werden. Nichtsdestotrotz bewirkt die dynamische Anpassung der Anregungspulse 13 unter Berücksichtigung der verbleibenden Anregung des Lasermediums 2 eine Verbesserung. So ist aus Figur 4 ersichtlich, dass die Verzugszeit tᵥ des zweite Laserpulses 14 trotz der Simmerpulse 15 etwas kürzer ist, als diejenige des ersten Laserpulses 14 (t₂ - t₁ > t₄ - t₃). Dies wird von dem Anregungspuls-Ermittler 7 berücksichtigt und der zweiten Anregungspuls 13 entsprechend verkürzt, indem er später beginnt als ohne die dynamische Anpassung.

Anhand der Figur 2 bis 4 wurde ersichtlich, dass mittels des Anregungspuls-Ermittlers 7 zumindest teilweise eine Bestimmung der Hochfrequenz-Anregungspulse 13 derart erfolgt, dass die Hochfrequenz-Anregungspulse 13 umso stärker unter Veränderungen ihrer Start- und/oder Endzeitpunkte verkürzt werden, je höher eine verbleibende Anregung des Mediums 2 durch die vorhergehende Hochfrequenz-Anregung ist.

Ergänzend oder alternativ zu dem Betrieb gemäß den gezeigten Beispielen, kann mit dem CO₂-Gasentladungslaser 1 auch eine Erzeugung eines (zusammenhängenden) Laserpulses durch mehrere kürzere Anregungspulse erfolgen. Wie bereits eingangs erläutert, sind die Pausen zwischen diesen Anregungspulsen so kurz, dass die Laseremission im Medium zwischen den Anregungspulsen nicht abbricht, sondern sich gegebenenfalls nur etwas abschwächt. Bei diesem Betriebsmodus kann die restanregungsabhängige Anpassung der Anregungspulse durch den Anregungspuls-Ermittler 7 auch durch ein Weglassen von Einzelpulsen in den Anregungspulssequenzen erfolgen.

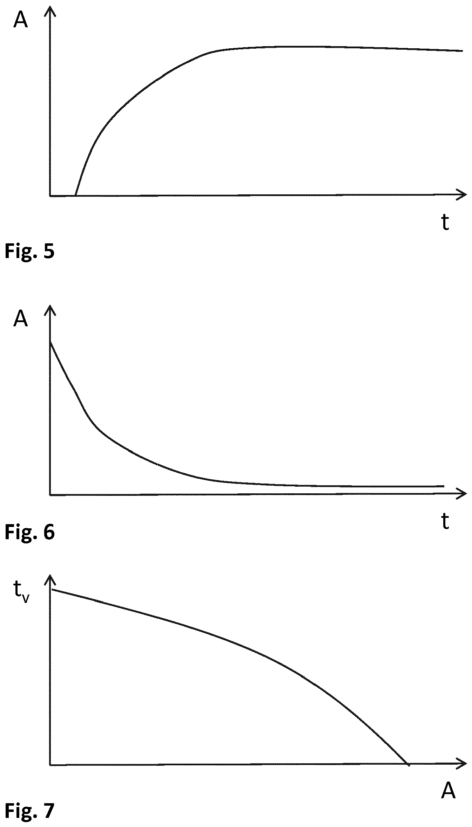

Anhand der Figuren 5 bis 7 werden im Folgenden die Berechnungsvorgänge im Anregungspuls-Ermittler 7, insbesondere im Anpassungs-Modul 9 des Anregungspuls-Ermittlers 7, näher erläutert.

Figur 5 zeigt einen Verlauf eines Maßes für die Anregung des Lasermediums 2 in Abhängigkeit der Zeit, mit welcher ein Anregungspuls 13 auf das Medium einwirkt. Figur 6 zeigt einen Verlauf des Maßes der Anregung des Lasermediums 2 in Abhängigkeit der Zeit, wenn kein Anregungspuls 13 auf das Lasermedium 2 wirkt. Schließlich zeigt Figur 7 den Verlauf der Verzugszeit tᵥ in Abhängigkeit des Maßes der verbleibenden Anregung des Lasermediums 2 gemäß den Figuren 5 und 6. Diese drei Funktionen sind im Anpassungs-Modul 9 hinterlegt. Sie werden beispielsweise auf Basis von Versuchsmessungen mit verschiedenen Pulsfolgen ermittelt. Das Maß der Anregung des Lasermediums 2 kann in Form eines konkreten Energiewertes, aber auch als dimensionslose Kenngröße verwendet werden. Das Maß der Verzugszeit kann ebenfalls als konkreter Zeitwert aber auch als dimensionslose Kenngröße verrechnet werden.

Gegebenenfalls können die Funktionen auch im Rahmen eines Kalibierprozess des Laserstrahlerzeugers ermittelt werden.

Das Anpassungs-Modul 9 arbeitet auf Basis der Verläufe gemäß den Figuren 5 bis 7 wie folgt. Immer wenn ein Anregungspuls 13 ein- oder ausgeschaltet wird, wird das aktuelle Anregungsniveau des Lasermediums 2 bestimmt. Das Modul 9 greift auf den Wert der zuletzt berechneten Anregung zurück und bestimmt die Veränderung des Anregungsniveaus anhand der Verläufe aus den Figuren 5 und 6.

Beim Ausschalten eines Anregungspulses 13 wird die Veränderung des Anregungsniveaus mit Hilfe des Verlaufes aus Figur 5 und der Dauer des Anregungspulses 13 (= Endzeit - Startzeit) berechnet, da angenommen wird, dass sich während des gerade beendeten Anregungspulses 13 die Anregung gemäß dem hinterlegten Verlauf verändert hat.

Beim Einschalten eines Anregungspulses 13 erfolgt die Bestimmung des Anregungszustands mit Hilfe der Funktion gemäß Figur 6, da angenommen wird, dass während der anregungspulsfreien Zeitspanne die Anregung gemäß Figur 6 abfällt. Auf Basis dieses Berechnungsmodells wird laufend der Zustand des Lasermediums 2 berechnet. Dies erfolgt auf besonders einfache Weise lediglich mittels hinterlegten Funktionen und dem Rückgriff auf die Ein- und Ausschaltzeitpunkte der Anregungspulse 13. Da jeweils der zuletzt berechnete Anregungszustand als Basis herangezogen wird, fließen in die Berechnung nicht nur der direkt vorhergehende Anregungspuls bzw. nicht nur die Ausschaltzeit seit dem letzten Anregungspuls 13 ein, sondern auch frühere Anregungspulse 13. Es wird eine Historie der Anregungspulse 13 berücksichtigt, mittels derer eine hochdynamische Anpassung möglich ist. Die Anpassung der Anregungspulse 13 erfolgt schließlich wie folgt.

Zum Startzeitpunkt eines Pulses in einer Pulsvorgabe 11 (z. B. Zeitpunkt t₄ in Figur 2), ermittelt das Anpassungs-Modul 9 auf Basis des Anregungszustandes, der zum Ausschaltzeitpunkt des letzten Anregungspulses 13 ermittelt wurde, den aktuellen Zustand des Mediums 2 mit Hilfe des Verlaufs aus Figur 6. Mit dem so ermittelten Wert für das Maß des Anregungszustandes ergibt sich aus dem Verlauf gemäß Figur 7 eine Abschätzung für die anregungsabhängige Verzugszeit tᵥ. Mit Hilfe der ermittelten Verzugszeit tᵥ wird nun die Anpassungszeit tₐ berechnet und der Anregungspuls 13 entsprechend später gestartet.

Bei alternativen Betriebsmodi können die Anregungspulse 13 - wie bereits erwähnt - auf Basis der Funktionen in anderer Weise modifiziert werden, z. B. abhängig von Anregungszustand früher beendet werden.

Vielfältige Modifikationen der steuertechnischen Implementierung der Erfindung sind denkbar. Die vorliegende Erfindung wird jedoch durch die folgenden Ansprüche definiert.

Die vorstehenden Erläuterungen beschreiben lediglich eine bevorzugte beispielhafte Implementierung. Die dargestellten Diagramme sind nicht maßstabsgetreu. Insbesondere sind gezeigte Effekte zur besseren Veranschaulichung teilweise übertrieben dargestellt.

## Patentansprüche

1. Verfahren zur Erzeugung von Plasma- bzw. Laserpulsen (14) mittels Hochfrequenz-Anregungspulsen (13), wobei zur Erfüllung von Plasma- bzw. Laserpulsvorgaben (11) ein Medium (2) mit Hochfrequenz-Anregungspulsen (13) angeregt wird, wobei die Hochfrequenz-Anregungspulse (13) zumindest teilweise abhängig von einer vorhergehenden Hochfrequenz-Anregung des Mediums (2) festgelegt werden, **dadurch gekennzeichnet, dass** zumindest teilweise eine Festlegung der Hochfrequenz-Anregungspulse (13) derart erfolgt, dass die Hochfrequenz-Anregungspulse (13) umso stärker energiereduziert werden, je höher eine verbleibende Anregung des Mediums (2) durch die vorhergehende Hochfrequenz-Anregung ist, und **dass** die Hochfrequenz-Anregungspulse (13) zumindest teilweise energiereduziert werden, indem die Hochfrequenz-Anregungspulse (13), insbesondere unter Veränderungen ihrer Start- und/oder Endzeitpunkte, verkürzt werden.

2. Verfahren nach Anspruch 1, **dadurch gekennzeichnet, dass** durch die Hochfrequenz-Anregungspulse (13) ein Lasermedium (2) eines Gasentladungslasers, vorzugweise eines CO- oder CO₂-Gasentladungslasers und/oder eines geströmten Gasentladungslasers (1), angeregt wird.

3. Verfahren nach einem der vorigen Ansprüche, **dadurch gekennzeichnet, dass** zur Festlegung der Hochfrequenz-Anregungspulse (13) ein Maß für die Verzugszeit (tᵥ) zwischen dem Beginn eines Hochfrequenz-Anregungspulses (13) und des dadurch erzeugten Plasma- bzw. Laserpulses (14) verwendet wird, wobei das Maß für die Verzugszeit (tᵥ) vorzugsweise in Abhängigkeit eines Maßes für die verbleibende Anregung des Mediums (2) bestimmt wird.

4. Verfahren nach einen der vorigen Ansprüche, **dadurch gekennzeichnet, dass** zur Festlegung der Hochfrequenz-Anregungspulse (13) auf ein hinterlegtes Berechnungsmodell zurückgegriffen wird, vorzugsweise um ein Maß für die verbleibende Anregung des Mediums (2) und/oder für die Verzugszeit (tᵥ) zwischen dem Beginn eines Hochfrequenz-Anregungspulses (13) und des dadurch erzeugten Plasma- bzw. Laserpulses (14) zu bestimmen.

5. Verfahren nach einem der vorigen Ansprüche, **dadurch gekennzeichnet, dass** zur Bestimmung eines Maßes für die verbleibende Anregung des Mediums (2) die Start- und/oder Endzeitpunkte der vorhergehenden Hochfrequenz-Anregungspulse (13) verwendet werden.

6. Verfahren nach einem der vorigen Ansprüche, **dadurch gekennzeichnet, dass** zur Bestimmung eines Maßes für die verbleibende Anregung des Mediums (2) eine Funktion der Anregungsveränderung, wenn keine Hochfrequenz-Anregung erfolgt, und/oder eine Funktion der Anregungsveränderung während einer Hochfrequenz-Anregung verwendet werden.

7. Verfahren nach einem der vorigen Ansprüche, **dadurch gekennzeichnet, dass** zur Anpassung der Hochfrequenz-Anregungspulse (13) eine programmierbare (Logik-)Gatter-Anordnung verwendet wird.

8. Verfahren nach einem der vorigen Ansprüche, **dadurch gekennzeichnet, dass** das Medium (2) zwischen Hochfrequenz-Anregungspulsen (13) zur Erzeugung von Plasma- bzw. Laserpulsen (14) zusätzlich mit Hochfrequenz-Anregungspulsen (15) angeregt wird, durch welche das Medium (2) nicht zur Pulsemission anregt wird (Simmerpulse).

9. Verfahren nach einem der vorigen Ansprüche, **dadurch gekennzeichnet, dass** ein Kalibrierprozess durchgeführt wird, bei welchem Parameter bestimmt werden, die zur Festlegung eines hinterlegten Berechnungsmodells dienen, vorzugsweise um ein Maß für die verbleibende Anregung des Mediums (2) und/oder für die Verzugszeit (tᵥ) zwischen dem Beginn eines Hochfrequenz-Anregungspulses (13) und des dadurch erzeugten Plasma- bzw. Laserpulses (14) zu bestimmen.

10. Steuereinheit für einen Hochfrequenz-Anregungspuls-Generator (5) für eine Vorrichtung (1) zur Erzeugung von Plasma- bzw. Laserpulsen (14) mittels Hochfrequenz-Anregungspulsen (13), welche zur Durchführung eines Verfahrens nach einem der vorhergehenden Ansprüche konfiguriert ist.

11. Hochfrequenz-Anregungspuls-Generator (5) mit einer Steuereinheit gemäß Anspruch 10.

12. Vorrichtung (1) zur Erzeugung von Plasma- bzw. Laserpulsen (14) mittels Hochfrequenz-Anregungspulsen (13) mit einem Hochfrequenz-Anregungspuls-Generator (5) gemäß Anspruch 11.

13. Vorrichtung (1) nach Anspruch 12, wobei die Vorrichtung (1) als Gasentladungslaser, vorzugweise als CO- oder CO₂-Gasentladungslaser und/oder als geströmter Gasentladungslaser (1), ausgebildet ist.

## Claims

1. A method for generating plasma or laser pulses (14) by means of high frequency excitation pulses (13), wherein a medium (2) is excited with high frequency excitation pulses (13) in order to fulfil plasma or laser pulse specifications (11), wherein the high frequency excitation pulses (13) are established at least partially dependent on a preceding high frequency excitation of the medium (2), **characterized in that** establishment of the high frequency excitation pulses (13) is at least partially carried out in such a way that the high frequency excitation pulses (13) become commensurately more strongly reduced in energy when a remaining excitation of the medium (2) by the preceding high frequency excitation is higher, and that the high frequency excitation pulses (13) are at least partially reduced in energy by shortening the high frequency excitation pulses (13), particularly with their start and/or end times being modified.

2. The method according to claim 1, **characterized in that** a laser medium (2) of a gas discharge laser, preferably of a CO or CO₂ gas discharge laser and/or of a flow gas discharge laser (1), is excited by the high frequency excitation pulses (13).

3. The method according to one of the preceding claims, **characterized in that** a measure for the delay time (tᵥ) between the start of a high frequency excitation pulse (13) and of the plasma or laser pulse (14) thereby generated is used for establishing the high frequency excitation pulses (13), the measure for the delay time (tᵥ) preferably being determined dependent on a measure for the remaining excitation of the medium (2).

4. The method according to one of the preceding claims, **characterized in that** a stored calculation model is employed for establishing the high frequency excitation pulses (13), preferably in order to determine a measure for the remaining excitation of the medium (2) and/or for the delay time (tᵥ) between the start of a high frequency excitation pulse (13) and of the plasma or laser pulse (14) thereby generated.

5. The method according to one of the preceding claims, **characterized in that** the start and/or end times of the preceding high frequency excitation pulses (13) are used for determining a measure for the remaining excitation of the medium (2).

6. The method according to one of the preceding claims, **characterized in that** a function of the excitation variation when no high frequency excitation is taking place, and/or a function of the excitation variation during a high frequency excitation, are used for determining a measure for the remaining excitation of the medium (2).

7. The method according to one of the preceding claims, **characterized in that** a programmable (logic) gate array is used for adapting the high frequency excitation pulses (13).

8. The method according to one of the preceding claims, **characterized in that**, between high frequency excitation pulses (13) for generating plasma or laser pulses (14), the medium (2) is additionally excited with high frequency excitation pulses (15) by which the medium (2) is not excited into pulse emission (simmer pulses).

9. The method according to one of the preceding claims, **characterized in that** a calibration process is carried out, in which parameters are determined that are used for establishing a stored calculation model, preferably in order to determine a measure for the remaining excitation of the medium (2) and/or for the delay time (tᵥ) between the start of a high frequency excitation pulse (13) and of the plasma or laser pulse (14) thereby generated.

10. A control unit for a high frequency excitation pulse generator (5) for a device (1) for generating plasma or laser pulses (14) by means of high frequency excitation pulses (13), which is configured for carrying out a method according to one of the preceding claims.

11. A high frequency excitation pulse generator (5), comprising a control unit according to claim 10.

12. A device (1) for generating plasma or laser pulses (14) by means of high frequency excitation pulses (13), comprising a high frequency excitation pulse generator (5) according to claim 11.

13. The device (1) according to claim 12, wherein the device (1) is configured as a gas discharge laser, preferably as a CO or CO₂ gas discharge laser and/or as a flow gas discharge laser (1).

## Revendications

1. Procédé de génération d'impulsions de plasma ou laser (14) au moyen d'impulsions d'excitation à haute fréquence (13), dans lequel, pour satisfaire des spécifications d'impulsions de plasma ou laser (11), un milieu (2) est excité avec des impulsions d'excitation à haute fréquence (13), les impulsions d'excitation à haute fréquence (13) étant définies au moins partiellement en fonction d'une excitation à haute fréquence précédente du milieu (2), **caractérisé en ce que** les impulsions d'excitation à haute fréquence (13) sont définies au moins partiellement de telle sorte que les impulsions d'excitation à haute fréquence (13) sont d'autant plus fortement réduites en énergie qu'une excitation restante du milieu (2) par l'excitation à haute fréquence précédente est élevée, et que les impulsions d'excitation à haute fréquence (13) sont au moins partiellement réduites en énergie en raccourcissant les impulsions d'excitation à haute fréquence (13), en particulier en modifiant leurs instants de début et/ou de fin.

2. Procédé selon la revendication 1, **caractérisé en ce que** les impulsions d'excitation haute fréquence (13) excitent un milieu laser (2) d'un laser à décharge gazeuse, de préférence d'un laser à décharge gazeuse CO ou CO₂ et/ou d'un laser à décharge gazeuse à écoulement (1).

3. Procédé selon l'une des revendications précédentes, **caractérisé en ce qu'**une mesure du temps de retard (tᵥ) entre le début d'une impulsion d'excitation à haute fréquence (13) et l'impulsion de plasma ou laser (14) ainsi générée est utilisée pour définir les impulsions d'excitation à haute fréquence (13), la mesure du temps de retard (tᵥ) étant déterminée de préférence en fonction d'une mesure de l'excitation restante du milieu (2).

4. Procédé selon l'une des revendications précédentes, **caractérisé en ce qu'**un modèle de calcul enregistré est utilisé pour définir les impulsions d'excitation à haute fréquence (13), de préférence pour déterminer une mesure de l'excitation restante du milieu (2) et/ou du temps de retard (tᵥ) entre le début d'une impulsion d'excitation à haute fréquence (13) et l'impulsion de plasma ou laser (14) ainsi générée.

5. Procédé selon l'une des revendications précédentes, **caractérisé en ce que** l'on utilise les instants de début et/ou de fin des impulsions d'excitation à haute fréquence (13) précédentes pour déterminer une mesure de l'excitation restante du milieu (2).

6. Procédé selon l'une des revendications précédentes, **caractérisé en ce que** l'on utilise une fonction de la modification d'excitation en l'absence d'excitation à haute fréquence et/ou une fonction de la modification d'excitation pendant une excitation à haute fréquence pour déterminer une mesure de l'excitation restante du milieu (2).

7. Procédé selon l'une des revendications précédentes, **caractérisé en ce que** l'on utilise un agencement de portes (logiques) programmable pour adapter les impulsions d'excitation à haute fréquence (13).

8. Procédé selon l'une des revendications précédentes, **caractérisé en ce qu'**entre des impulsions d'excitation à haute fréquence (13) pour générer des impulsions de plasma ou laser (14), le milieu (2) est en outre excité avec des impulsions d'excitation à haute fréquence (15) au moyen desquelles le milieu (2) n'est pas excité pour l'émission d'impulsions (impulsions de préchauffage).

9. Procédé selon l'une des revendications précédentes, **caractérisé en ce que** l'on effectue un processus d'étalonnage dans lequel on détermine des paramètres qui servent à définir un modèle de calcul enregistré, de préférence pour déterminer une mesure de l'excitation restante du milieu (2) et/ou du temps de retard (tᵥ) entre le début d'une impulsion d'excitation à haute fréquence (13) et l'impulsion de plasma ou laser (14) ainsi générée.

10. Unité de commande pour un générateur d'impulsions d'excitation à haute fréquence (5) pour un dispositif (1) de génération d'impulsions de plasma ou laser (14) au moyen d'impulsions d'excitation à haute fréquence (13), lequel est configuré pour mettre en œuvre un procédé selon l'une des revendications précédentes.

11. Générateur d'impulsions d'excitation à haute fréquence (5) comprenant une unité de commande selon la revendication 10.

12. Dispositif (1) de génération d'impulsions de plasma ou laser (14) au moyen d'impulsions d'excitation à haute fréquence (13) avec un générateur d'impulsions d'excitation à haute fréquence (5) selon la revendication 11.

13. Dispositif (1) selon la revendication 12, lequel dispositif (1) est réalisé sous la forme d'un laser à décharge gazeuse, de préférence d'un laser à décharge gazeuse CO ou CO₂ et/ou d'un laser à décharge gazeuse à écoulement (1).
